# EUROPEAN PATENT SPECIFICATION

(11) **EP 2 457 437 B1**
(45) Date of publication and mention of the grant of the patent: **16.03.2016**
(21) Application number: 11190213.6
(22) Date of filing: 23.11.2011
(51) Int. Cl.: A01G 9/14, A01G 9/24

(54) **Smart control system for canopy greenhouse**
Intelligentes Steuerungssystem für ein Verdecktreibhaus
Système de contrôle intelligent de serre à auvent

(30) Priority: 25.11.2010 TW 099222840
(43) Date of publication of application: 30.05.2012
(73) Proprietor: Lu, Jenn-Kan, New Taipei City (TW); Huang, Shih-Ming, Tainan City (TW)
(72) Inventor: Lu, Jenn-Kan, New Taipei City, Taiwan (R.O.C.) (TW); Huang, Shih-Ming, Tainan City, Taiwan (R.O.C.) (TW); Tsao, John, Xuhui District (CN); Siao, Jhih-Jhong, 106 Taipei City, Taiwan (R.O.C.) (TW)
(74) Representative: Cabinet Chaillot

(56) References cited:
- WO-A1-2007/101336
- WO-A2-2004/016875
- BE-A2- 905 081
- DE-A1- 2 228 405
- FR-A1- 2 388 486
- US-A- 2 737 876
- US-A- 5 410 844

## Description

### BACKGROUND OF THE INVENTION

### 1. FIELD OF THE INVENTION

The present invention relates to a intelligence canopy greenhouse control system applicable to cultivation and production of fruit trees or vegetables at different latitudes from the temperate zone (cold in winter) to the subtropical zone (hot in summer), seasons and wind directions.

### 2. DESCRIPTION OF THE PRIOR ART

As indispensible foods of human beings, plants are affected by some critical conditions such as weather, water source and soil and may grow in greenhouses at different regions without influence of changeable weather.

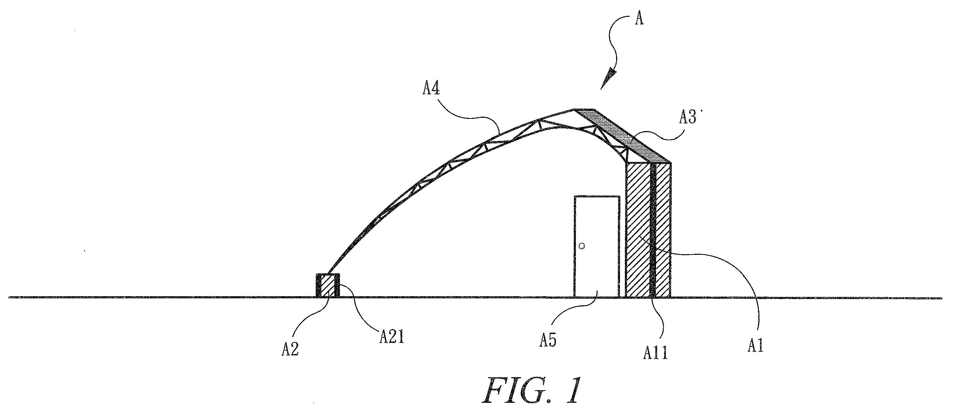

As shown in FIG. 1, the etiquette in the temperate monsoon climate is a greenhouse A manufactured in prior arts with one high concrete wall A1 facing a windward side and low concrete walls A2 around: (1) the high concrete wall A1 equipped with thermal insulation A11 inside; (2) the low concrete walls A2 provided with double-layer thermal insulation A21 inside and outside; (3) an access A5 installed on one lateral concrete wall; (4) a steel skeleton A3 setup on the top of the high concrete wall A1, extended to the top of the low concrete walls A2 and covered with a plastic film A4. Therefore, a greenhouse A is developed according to this arrangement thereof.

However, the time spent in building the greenhouse A whose high concrete wall A1 is effective in resisting chilly wind is long and plants in summer cannot grow inside the overheated greenhouse A in which there is no intake/vent installed except the single access A5 for ventilation only.

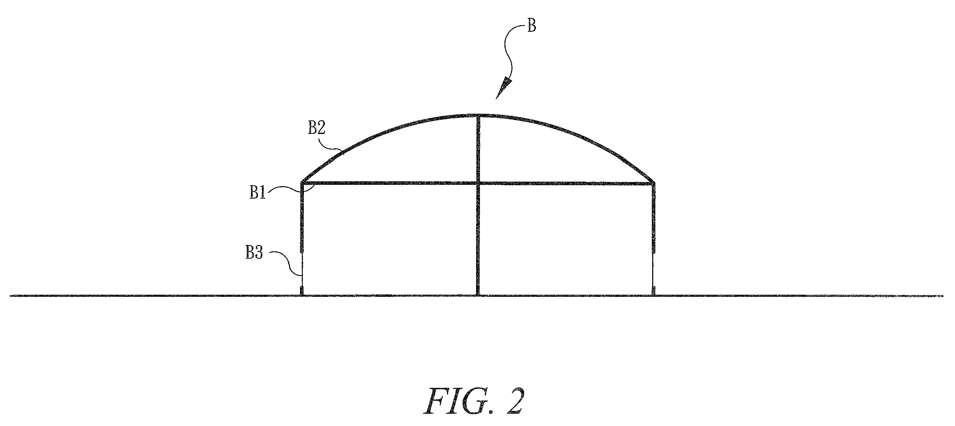

As shown in FIG. 2, the etiquette in the subtropical monsoon climate is a greenhouse B manufactured in prior arts that use hot-dip galvanized pipes B1 to constitute a skeleton covered with a plastic film B2 on which there are several intakes/vents B3 installed. However, temperature of the greenhouse B in which hot air accumulates atop but has nowhere to go because of no skylight opened at that structure's ceiling ascends and causes installation of an extra mechanical ventilation system, energy consumption and high maintenance cost.

In WO 2004/016875 A2 a panel building system is provided comprising at least one elongate structural member each of which defines in cross-section a track portion having a constant profile along its length, said track portion receiving and retaining a number of panel receiving strips interspersed with bar receiving connectors, the strips and the connectors each having a formation shaped for slidable insertion into said track portion.

In view of the said drawbacks, the inventor who expects to provide an intelligence canopy greenhouse control system featuring high construction rate but low construction cost has devoted himself to developing, designing and assembling the present invention for consumers.

### SUMMARY OF THE INVENTION

The principal object of the present invention is to provide an intelligence canopy greenhouse control system in which some assemblies can be adjusted in compliance with different latitudes, seasons and wind directions.

The other object of the present invention is to provide an intelligence canopy greenhouse control system featuring high construction rate but low construction cost.

The further object of the present invention is to provide an intelligence canopy greenhouse control system which can be further extended laterally and longitudinally according to environmental factors.
To this end, the intelligence canopy greenhouse control system in the present invention is provided with a plurality of main brackets which are symmetrically arranged , each of the main brackets penetrates to the upper edge of a curved tubular beam, wherein the curved tubular beam's one end protrudes from each main bracket; (2) a plurality of small crossbeams set up between the two curved tubular beams to reinforced the structure of the system ; (3) at least one louvered shutter set up between the two curved tubular beams and the two main brackets; (4) a film covered between the two curved tubular beams;(5) a steel sheet wrapping over gaps of two main brackets or two curved tubular beams' lower edges to become a first skeleton ; (6) a gutter, constructed at the edge of the first skeleton unit ; wherein at least one first skeleton unit assembles to construct the intelligence canopy greenhouse control system.

To achieve the said purpose, the intelligence canopy greenhouse control system of the present invention comprises: (1) the first skeleton unit hereinabove; (2) a second skeleton unit installed beside the first skeleton unit and comprising: two symmetrically arranged master brackets, each of which is connected to and penetrates one end of a curved tubular beam at its upper edge for the curved tubular beam's one end protruding from one main bracket and the other end coupled with the first skeleton unit's one main bracket; several small crossbeams installed between two curved tubular beams for development of a reinforced structure in which there are one film covered between two curved tubular beams and steel sheets wrapped over gaps of two main brackets or two curved tubular beams' lower edges to become a second skeleton. Therefore, a canopy greenhouse can be assembled by means of a plurality of first and second skeleton units.

In the said intelligence canopy greenhouse control system, the main bracket is a quasi-L-shaped framework provided with a port at the top for connection of a bended extension component on which there are one steel sheet and one louvered shutter mounted.

In the said intelligence canopy greenhouse control system, the main bracket's middle segment is connected to a curved slanted strut which is coupled with one curved tubular beam at one end and provided with a gutter between the curved slanted strut and the main bracket.

In the said intelligence canopy greenhouse control system, the louvered shutters mounted between the first skeleton unit's main brackets are connected to two main brackets' middle-to-lower or middle-to-upper segments.

In the said intelligence canopy greenhouse control system, the film could be a thin-film solar glass or plastic film.

In the said intelligence canopy greenhouse control system, the first skeleton unit's two curved tubular beams have their extended ends, which penetrate and protrude from the main brackets, provided with a gutter and other ends vertically contacting the ground level; two curved tubular beams are coupled with two louvered shutters wherein one is connected to the curved tubular beams' one side near the ground and equipped with a gutter at a joint of the louvered shutter's top and a film and the other is vertically connected to the curved tubular beams' another side near an apex.

In the said intelligence canopy greenhouse control system, the steel sheet could be a compound metal curtain steel sheet or a double-layer coated steel sheet.

In the said intelligence canopy greenhouse control system, the steel sheets connected between two curved tubular beams of the first skeleton unit and lower edges of the second skeleton unit's curved tubular beams are further provided with side windows or side doors.

In the said intelligence canopy greenhouse control system with a plurality of first skeleton units assembled laterally, each end of one first skeleton unit's both curved tubular beams penetrating and extending from two main brackets is further coupled with a straight tubular beam separately; the other ends of two straight tubular beams vertically contact the ground level for wind walls or windshields installed between two straight tubular beams.

In the said intelligence canopy greenhouse control system with a first skeleton unit and several second skeleton units assembled longitudinally, each end of the last second skeleton unit's both curved tubular beams penetrating and extending from two main brackets is further coupled with a straight tubular beam separately; the other ends of two straight tubular beams vertically contact the ground level for wind walls or windshields installed between two straight tubular beams.

In the said intelligence canopy greenhouse control system, the small crossbeams installed between the first skeleton unit's two curved tubular beams or the second skeleton unit's two curved tubular beams are further coupled with a funnel cap for introduction of wind on which there are two oppositely arranged vents with tubes extended from their base.

In the said intelligence canopy greenhouse control system, the canopy greenhouse composed of a plurality of first skeleton units or the canopy greenhouse composed of a plurality of first and second skeleton units is developed to be an automatic environmental adjustment/control system in which there are a LED light-compensation system, sunshades, a micro-infiltrating irrigation system, a sprayer & cooling system, a CO₂ adjustment system and a sensor system.

### BRIEF DESCRIPTION OF THE DRAWINGS

FIG. 1 illustrates the cross-sectional view of a greenhouse in the temperate monsoon climate.
FIG. 2 illustrates the cross-sectional view of a greenhouse in the subtropical monsoon climate.
FIG. 3 illustrates the perspective view of the first embodiment in the present invention.
FIG. 3A illustrates the other perspective view of the first embodiment in the present invention from another viewpoint.
FIG. 4A illustrates a wind direction in summer of the subtropical monsoon climate for the present invention as shown in FIG. 3.
FIG. 4B illustrates a wind direction in winter of the subtropical monsoon climate for the present invention as shown in FIG 3.
FIG. 5 illustrates another application of the first embodiment in the present invention.
FIG. 6A illustrates a wind direction in summer of the temperate monsoon climate for the present invention as shown in FIG. 5.
FIG. 6B illustrates a wind direction in winter of the temperate monsoon climate for the present invention as shown in FIG. 5.
FIG. 7 illustrates a lateral assembly of the first embodiment in the present invention.
FIG. 8A illustrates the perspective view of the second embodiment in the present invention.
FIG. 8B illustrates the side view of the second embodiment in the present invention.
FIG. 9 illustrates a longitudinal assembly of the second embodiment in the present invention.
FIG. 10 illustrates a longitudinal & lateral assembly of the second embodiment in the present invention.
FIG. 11 illustrates the cross-sectional view of the embodiment in the present invention with other systems incorporated.

### DETAILED DESCRIPTION OF THE PREFERRED EMBODIMENT

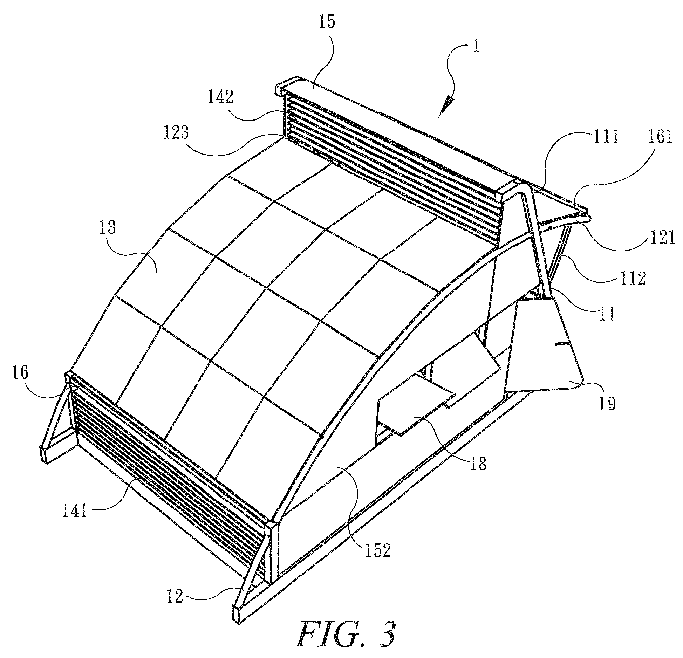

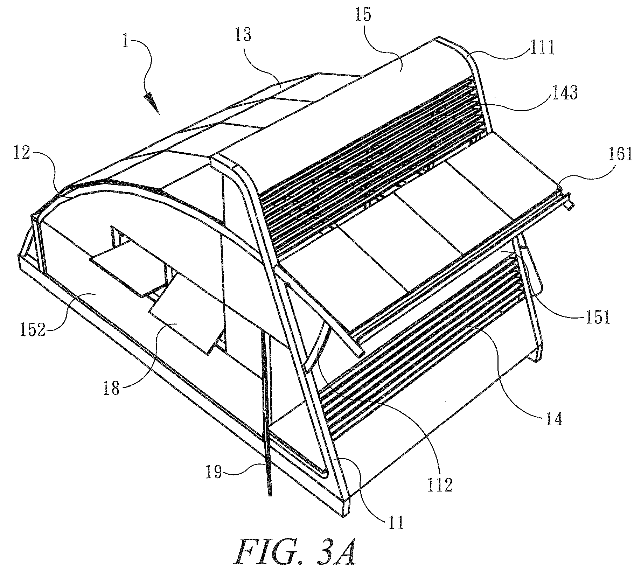

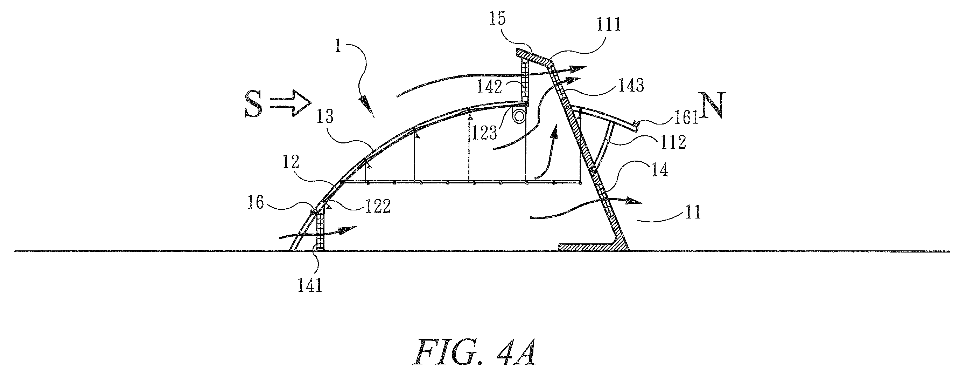

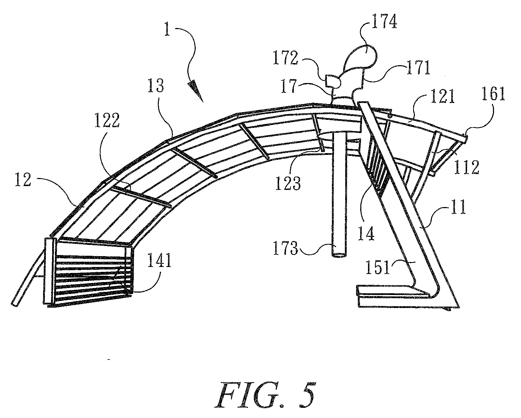

Referring to FIG. 3 and 3A which illustrate a intelligence canopy greenhouse control system of the present invention comprises: a first skeleton unit 1 with two quasi-L-shaped main brackets 11, each of which has a port on its top end for connection of a bended extension part 111; two louvered shutters 142, 143 and a steel sheet 15 installed on two extension parts 111 wherein two louvered shutters 142, 143 are oppositely arranged with a steel sheet covered over a small gap in between; a steel sheet 151 and a louvered shutter 14 (FIG 5) installed between two main brackets 11 wherein the louvered shutter 14 is located at middle-to-lower segments of the main brackets 11; an upward curved slanted strut 112 connected to the middle segment of the master bracket 11; a gutter 161 installed at the joint of the upward curved slanted strut 112 and the main bracket 11 (FIG 4A); an extension segment 121 which is extended from one end of a curved tubular beam 12 penetrating the upper part of the main bracket 11, connected to the upward curved slanted strut 112 on the main bracket 11, and coupled with the gutter 16 at the edge; equidistant small crossbeams mounted between two curved tubular beams 12 for a reinforced structure wherein the first small crossbeam 122 near the ground level is coupled with the gutter 16 and the louvered shutter 141; a film 13 covered from a front small crossbeam 122 to a rear small crossbeam 123, which is between two curved tubular beams 12, and on the extension segment 121 wherein the rear small crossbeam 123 is coupled with the other end of a louvered shutter 142 and the film 13 is manufactured with thin-film solar glass (in this embodiment) or plastic film; steel sheets 152 as walls developed from lower edges of two curved tubular beams 12 and provided with windows 18 and door planks 19.

The descriptions hereinafter are the present invention erected in a subtropical monsoon climate and allowing its film 13 to face windward in summer. Referring to FIG. 4A which illustrates opened louvered shutters 14, 141, 142 and 143 wherein the louvered shutters 141, 142 are wind-driven intakes (louvered shutter 141 as a gravity intake without wind flowing) and the louvered shutters 14, 143 are wind-driven vents (louvered shutter 143 as a gravity intake without wind flowing). The film 13 and the steel sheet 15 on extension parts 111 are effective in guiding wind toward vents and accelerating interior hot air to be discharged from the louvered shutter 143 and outdoor air to be introduced from the louvered shutters 14, 141 for higher gravity ventilation efficiency, ventilation frequency and better wind-driven ventilation efficiency at a lower layer due to the opposite louvered shutters 14, 141.

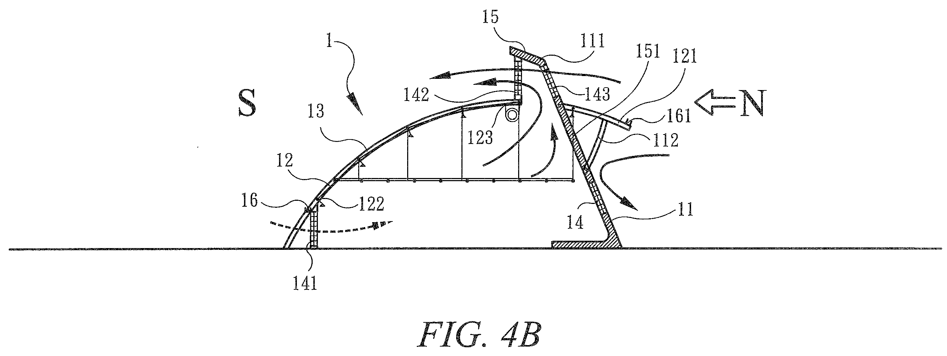

Referring to FIG. 4B which illustrates the louvered shutter 141, 142 and 143 opened and the louvered shutter 14 closed in winter. Because of the louvered shutter 141 as a gravity intake, wind is guided toward vents by the extension segments 121 of two curved tubular beams 12 and the steel sheet 151 accelerates interior hot air to be discharged from the louvered shutter 142 and outdoor air to be introduced from the louvered shutter 141 for higher ventilation efficiency featuring neither cold air directly absorbed indoors nor interior temperature suddenly reduced which adversely affect growth of plants.

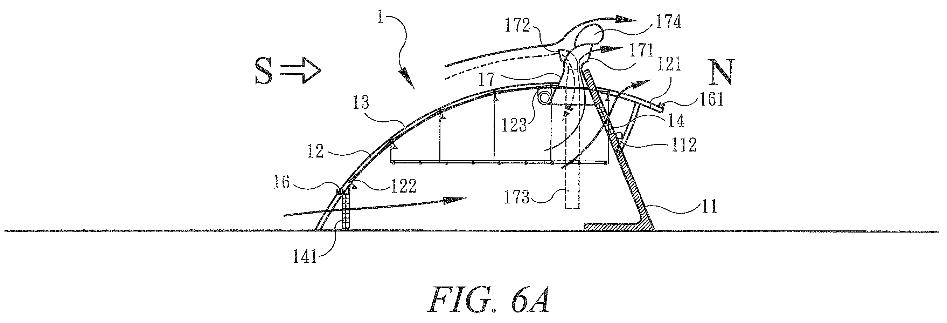

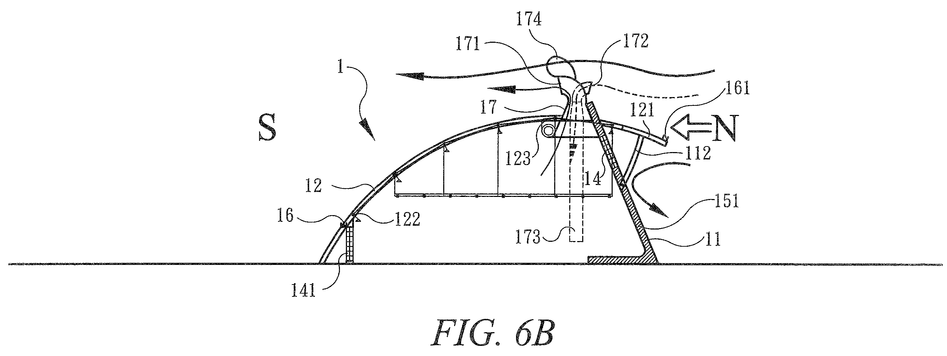

Referring to FIG. 5 which illustrates another embodiment different from FIG. 2: the louvered shutter 14 installed on the middle-to-upper segments of main brackets 11; a funnel cap 17 installed between the rear small crossbeam 123 linking two curved tubular beams 12 and the main brackets 11 and provided with two-way vents, large orifice 171 and small orifice 172, wherein the large orifice 171 is equipped with a wind vane 174 and the funnel cap 17 is extended downward to develop an air refreshing tube 173. The structure erected in the temperate monsoon climate is intended for the film 13 facing windward of summer monsoon. Referring to FIG. 6 which illustrates the louvered shutters 14 and 141 are opened (louvered shutter 141: wind-driven intake or gravity intake (without wind flowing); louvered shutter 14: wind-driven vent), the wind vane 174 on the funnel cap 17 turns due to flowing wind and allows the small orifice 172 (the large orifice 171) to always face windward (leeward), the film 13 guides wind to be absorbed from the small orifice 172 and blow downward along an air refreshing tube 173 for air flow transferred to a greenhouse's bottom, and louvered shutters 141 and 14 are setup along a diagonal for a reduced dead space and higher ventilation efficiency indoors.

Referring to FIG. 6B which illustrates louvered shutters 14 and 141 are closed in winter, large & small orifices 171 and 172 of the funnel cap 17 as a gravity intake and an vent separately allow cold air absorbed into the greenhouse 1 to be heated by hot air which will be discharged, and the steel sheet 151 resists cold wind in winter.

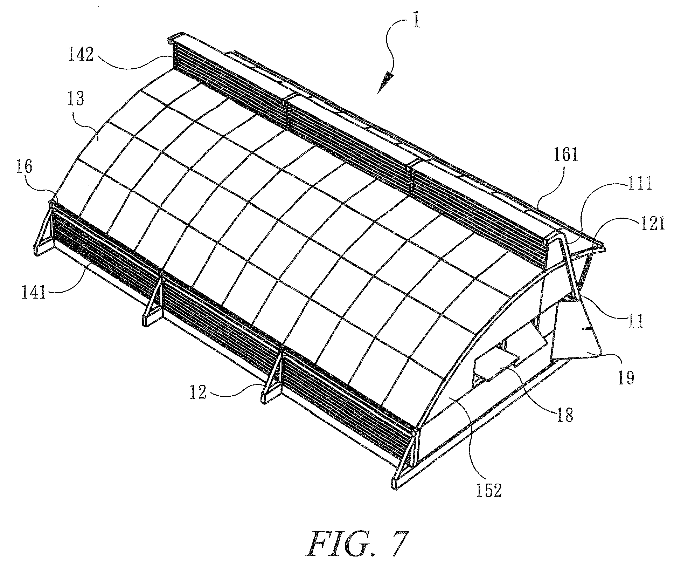

Referring to FIG. 7 which illustrates multiple first skeleton units 1 to increase a windward area and promote a ventilation rate in summer. In this embodiment, there are three first skeleton units 1 side by side wherein the steel sheets 152 are not connected to two curved tubular beams 12 of the central first skeleton unit 1 but to curved tubular beams 12 of other two first skeleton units 1 on both sides for development of a greenhouse structure with a high ventilation rate.

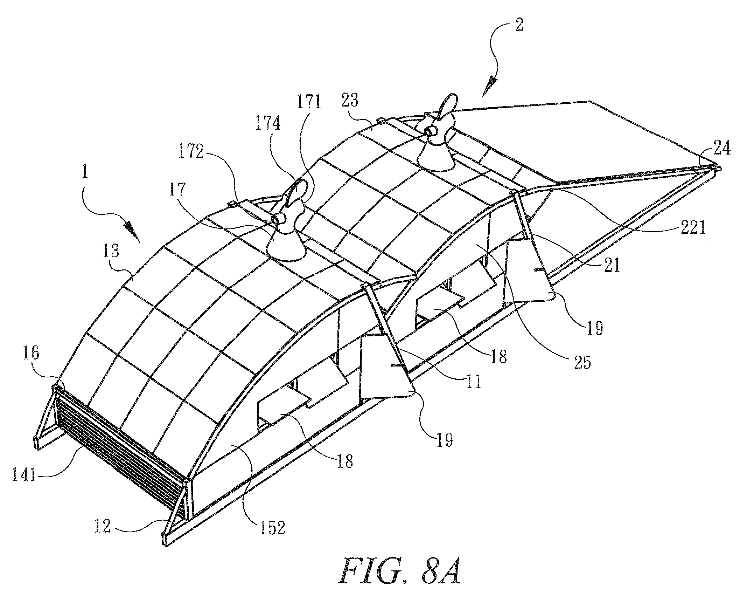

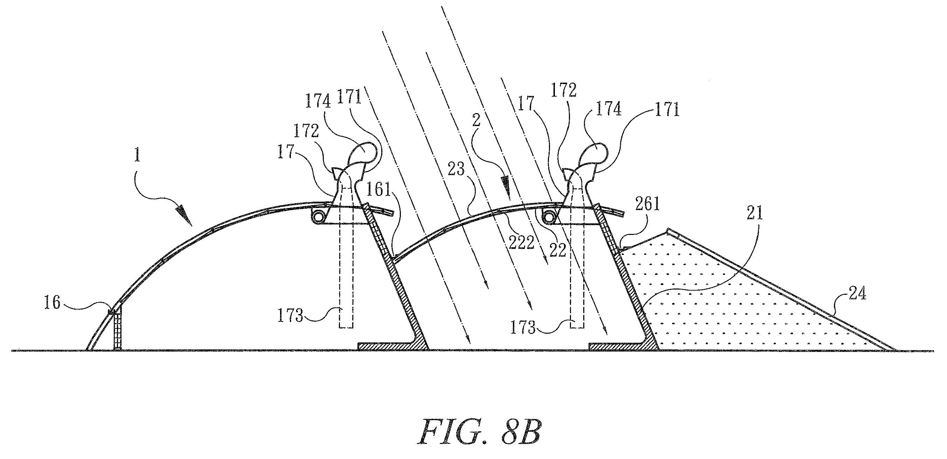

As shown in FIGS. 8A & 8B, the second embodiment of the present invention comprises the first skeleton unit 1 and the second skeleton unit 2 wherein the former is identical to that of the first embodiment and not repeatedly described hereinafter and the second skeleton unit 2 comprises: two quasi-L-shaped master brackets 21, each of which is equipped with a port 211 at the top; two curved tubular beams 22, each of which has one end penetrating the top of a main bracket 21 to develop an extension segment 221 further coupled with a straight tubular beam 24 for a wind wall or a windshield installed between two straight tubular beams 24 and has the other free end connected to the medium segment of one main bracket 11 on the first skeleton unit 1 and provided with a gutter 261 at the joint; equidistant small crossbeams 222 installed between two curved tubular beams 22 for a reinforced structure; a funnel cap 17 installed between a rear small crossbeam 222 and main brackets 21 and comprising two-way vents, large orifice 171 and small orifice 172, wherein the small orifice 172 is equipped with an extended tube 173 and the large orifice 171 is provided with a wind vane 174; a film 23 covered between two curved tubular beams 22 from front to back wherein the film 23 could be solar membrane glass (in this embodiment) or plastic film; steel sheets 25 as walls developed from lower edges of two curved tubular beams 22 and provided with windows 18 and door planks 19.

In addition, the gradient of a master bracket 11 on the first skeleton unit 1 or a main bracket 21 on the second skeleton unit 2 in the present invention is developed by an algorithm. Referring to FIG. 8 which illustrates the present invention erected in Harbin (Latitudes from 44° 04' to 46° 40'; solar elevation angle at noon in summer: 68.5°; solar elevation angle at noon in winner: 21.5°) wherein both the film 13 covered between two curved tubular beams 12 of the first skeleton unit 1 and the film 23 covered between two curved tubular beams 22 of the second skeleton unit are southward and manufactured with solar membrane glass for increased sunshine hours, effective incident angles of sunlight and power stably supplied in summer or winter, and gradients of main brackets 11, 21 parallel to incident angles of sunlight in summer result in sunshine hours of the second skeleton unit 2 not affected by main brackets 11 of the first skeleton unit 1.

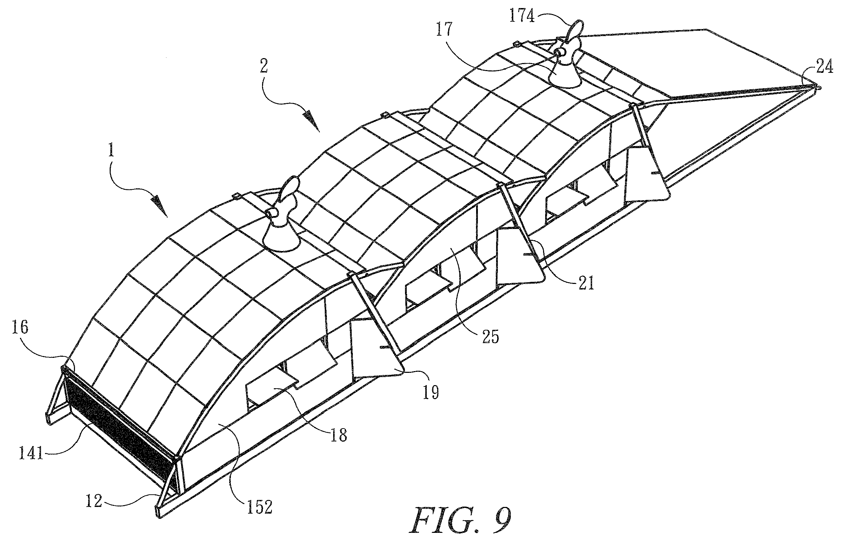

Referring to FIG. 9 which illustrates a first skeleton unit 1 and several second skeleton units 2 (two second skeleton units 2 in this embodiment) are arranged from front to back: two main brackets 11 of the first skeleton unit 1 are not connected to the steel sheet 151; the second skeleton units 2 are arranged in front of the first skeleton unit 1; the free ends of two curved tubular beams 22 on one second skeleton unit 2 are coupled with main brackets 11 on the first skeleton unit 1 for both the first skeleton unit 1 and the second skeleton units 2 connected one another; the free ends of two curved tubular beams 22 on one second skeleton unit 2 are coupled with main brackets 21 on the other second skeleton unit 2; the extension segment 221 is coupled with a straight tubular beam 24 for wind walls or windshields installed between two straight tubular beams 24; steel sheets 152, 25 are mounted around the first skeleton unit 1 and two second skeleton units 2. Therefore, a windward area in winter of the temperate zone is reduced to match a structure of one greenhouse for ventilation rates.

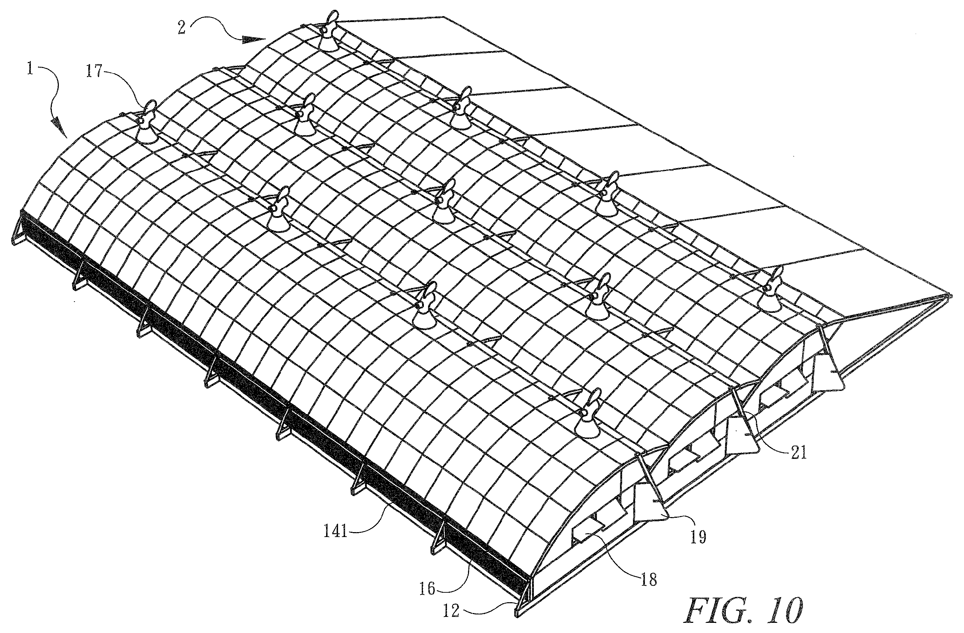

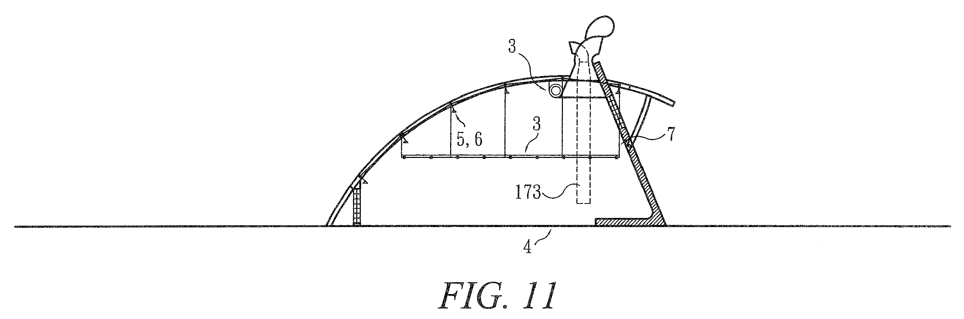

Referring to FIG. 10 which illustrates several first skeleton units 1 and a second skeleton unit 2 combined to become a greenhouse matching a required size as shown in FIG. 7. Furthermore, the present invention is also provided with other systems for a collective application. Referring to FIG. 11 which illustrates a greenhouse in the present invention is equipped with a LED light-compensation system 3, a micro-infiltrating irrigation system 4, a sprayer & cooling system 5, a CO₂ adjustment system 6 and a sensor system 7 for the greenhouse developed as an automatic environmental adjustment/control system and plants growing under best conditions.

It must be emphasized that the said disclosures demonstrate the preferred embodiments of the present invention only and cannot be used to restrict other embodiments of the present invention as defined by the appended claims.

## Claims

1. An intelligence canopy greenhouse control system comprising:
(1) a plurality of main brackets (11, 21) which are symmetrically arranged, each of the main brackets (11, 21) penetrates to the upper edge of a curved tubular beam (12, 22), wherein the curved tubular beam's one end protrudes from each main bracket (11,21);
(2) a plurality of small crossbeams (122, 123, 222) setting up between the two curved tubular beams (12, 22) to reinforce the structure of the system ;
(3) at least one louvered shutter (14, 141, 142, 143) setting up between the two curved tubular beams (12, 22) and the two main brackets (11, 21);
(4) a film (13) covering between the two curved tubular beams (12, 22);
(5) a steel sheet (15, 151) removably wrapping over gaps of two main brackets (11, 21) or two curved tubular beams' lower edges to become a first skeleton unit (1);
(6) a gutter (16, 161, 261) constructing at the edge of the first skeleton unit (1) ;
wherein at least one first skeleton unit (1) assembles to construct the intelligence canopy greenhouse control system.

2. The intelligence canopy greenhouse control system according to claim 1 comprising:
a second skeleton unit (2) for connection of the first skeleton unit (1) comprising:
(1) two main brackets (11, 21) which are symmetrically arranged, each of which penetrates into the upper edge of the curved tubular beam (12, 22) which protrudes from each main bracket (11, 21) at its one end and the other end connects to the first skeleton unit (1);
(2) a plurality of small crossbeams (122, 123) setting up between the two curved tubular beams (12) for a reinforced structure;
(3) a film (13) covered between the two curved tubular beams (12, 22);
(4) a steel sheets (15) removably wrapping over gaps of two main brackets (11, 21) or two curved tubular beams' lower edges to become a second skeleton (2);
wherein the second skeleton unit (2) assembles with the first skeleton unit (1) to construct the intelligence canopy greenhouse control system.

3. The intelligence canopy greenhouse control system according to claim 2, wherein the intelligence canopy greenhouse control system is constructed of a plurality of the first and second skeleton units (1, 2) laterally or longitudinally.

4. The intelligence canopy greenhouse control system according to claim 1 or 2, wherein the main bracket (11, 21) is a L-shaped framework which is equipped with a port on the top for connection of a bended extension part (111).

5. The intelligence canopy greenhouse control system according to claim 4, wherein the bended extension part (111) is coupled with at least a steel sheet (15) and a louvered shutter (14, 141, 142, 143).

6. The intelligence canopy greenhouse control system according to claim 1 or 2, wherein the middle segment of the main bracket (11, 21) is coupled with an upward curved slanted strut (112) which is connected to the curved tubular beam (12, 22) and the gutter (16, 161, 261) is further constructed between the curved slanted strut (112) and the main bracket (11,21).

7. The intelligence canopy greenhouse control system according to claim 1 or 2, wherein the louvered shutter (14, 141, 142, 143) between the two main brackets (11, 21) in the first skeleton unit (1) is connected to the middle-to-lower or middle-to-upper segments of the main bracket (11, 21).

8. The intelligence canopy greenhouse control system according to claim 1 or 2, wherein the film (13) is a thin-film solar glass or a plastic film.

9. The intelligence canopy greenhouse control system according to claim 1 or 2, wherein each of the two curved tubular beams (12, 22) in the first skeleton unit (1) has one end vertically contacting the ground and the two curved tubular beams (12, 22) are combined with the two louvered shutters (14, 141, 142, 143) which includes: one is located at the ground side of the curved tubular beam (12, 22) and equipped with the gutter (161) at a joint of the top of the louvered shutter (14, 141, 142, 143) and the film (13); the other is vertically coupled with the curved tubular beams' apex.

10. The intelligence canopy greenhouse control system according to claim 1 or 2, wherein the steel sheets (15) are compound metal curtain walls or double-layer coated steel sheets (15).

11. The intelligence canopy greenhouse control system according to claim 1 or 2, wherein the steel sheets (15) being between two curved tubular beams (12, 22) of the first skeleton unit (1) or at lower edges of the second skeleton unit's (2) curved tubular beams (12, 22) are further provided with side windows (18) or side doors (19).

12. The intelligence canopy greenhouse control system according to claim 1 or 2, an extended end of the two curved tubular beams (12, 22) protruding from the main bracket (11, 21) is further coupled with the straight tubular beams (24).

13. The intelligence canopy greenhouse control system according to claim 1 or 2, wherein the small crossbeams (122, 123) installed on the two curved tubular beams (12, 22) of the first or second skeleton unit (1, 2) are coupled with a funnel cap (17) used to guide wind indoors.

14. The intelligence canopy greenhouse control system according to claim 13, wherein the funnel cap (17) is provided with two oppositely arranged vents.

15. The intelligence canopy greenhouse control system according to claim 14, wherein the vent has a tube extended from their base.

16. The intelligence canopy greenhouse control system according to claim 1 or 2, wherein the canopy greenhouse additionally comprises an automatic environmental adjustment/control system with a LED light-compensation system, sunshades, a micro-infiltrating irrigation system, a sprayer & cooling system, a CO₂ adjustment system and a sensor system.

17. The intelligence canopy greenhouse control system according to claim 12, further comprising a wind wall or windshield that is constructed between the two straight tubular beams (24).

## Patentansprüche

1. Intelligentes Steuerungssystem für ein Treibhaus mit Dach, umfassend:
(1) eine Vielzahl von Hauptträgern (11, 21), die symmetrisch angeordnet sind, wobei jeder der Hauptträger (11, 21) bis zum oberen Rand eines gebogenen Trägerrohrs (12, 22) eindringt, wobei ein Ende des gebogenen Trägerrohrs aus jedem Hauptträger (11, 21) ragt;
(2) eine Vielzahl von kleinen Querträgern (122, 123, 222), die zwischen den beiden gebogenen Trägerrohren (12, 22) zur Verstärkung der Struktur des Systems montiert ist;
(3) mindestens eine Jalousie (14, 141, 142, 143), die zwischen den beiden gebogenen Trägerrohren (12, 22) und den beiden Hauptträgern (11, 21) montiert ist;
(4) eine Schicht (13), die zwischen den beiden gebogenen Trägerrohren (12, 22) ausgebreitet ist;
(5) ein Stahlblech (15, 151), das abnehmbar über Spalte von zwei Hauptträgern (11, 21) oder unteren Rändern von zwei gebogenen Trägerrohren gelegt ist, damit daraus eine erste Skeletteinheit (1) wird;
(6) eine Ablaufrinne (16, 161, 261), die am Rand der ersten Skeletteinheit (1) konstruiert ist;
wobei mindestens eine erste Skeletteinheit (1) so zusammengesetzt ist, dass damit das intelligente Steuerungssystem für ein Treibhaus mit Dach aufgebaut ist.

2. Intelligentes Steuerungssystem für ein Treibhaus mit Dach nach Anspruch 1, umfassend:
eine zweite Skeletteinheit (2) zum Anbinden der ersten Skeletteinheit (1), umfassend:
(1) zwei Hauptträger (11, 21), die symmetrisch angeordnet sind, wobei jeder davon in den oberen Rand des gebogenen Trägerrohrs (12, 22) eindringt, das an einem Ende davon aus jedem Hauptträger (11, 21) ragt und das andere Ende mit der ersten Skeletteinheit (1) verbunden ist;
(2) eine Vielzahl von kleinen Querträgern (122, 123), die zwischen den beiden gebogenen Trägerrohren (12) für eine verstärkte Struktur montiert ist;
(3) eine Schicht (13), die zwischen den beiden gebogenen Trägerrohren (12, 22) ausgebreitet ist;
(4) ein Stahlblech (15), das abnehmbar über Spalte von zwei Hauptträgern (11, 21) oder unteren Rändern von zwei gebogenen Trägerrohren gelegt ist, damit daraus ein zweites Skelett (2) wird;
wobei die zweite Skeletteinheit (2) mit der ersten Skeletteinheit (1) so zusammengesetzt ist, dass damit das intelligente Steuerungssystem für ein Treibhaus mit Dach aufgebaut ist.

3. Intelligentes Steuerungssystem für ein Treibhaus mit Dach nach Anspruch 2, wobei das intelligente Steuerungssystem für ein Treibhaus mit Dach aus einer Vielzahl der ersten und zweiten Skeletteinheiten (1, 2) seitlich oder längs aufgebaut ist.

4. Intelligentes Steuerungssystem für ein Treibhaus mit Dach nach Anspruch 1 oder 2, wobei der Hauptträger (11, 21) ein L-förmiger Rahmen ist, der oben mit einer Öffnung zur Verbindung mit einem gebogenen Erweiterungsteil (111) ausgestattet ist.

5. Intelligentes Steuerungssystem für ein Treibhaus mit Dach nach Anspruch 4, wobei der gebogene Erweiterungsteil (111) mit mindestens einem Stahlblech (15) und einer Jalousie (14, 141, 142, 143) verbunden ist.

6. Intelligentes Steuerungssystem für ein Treibhaus mit Dach nach Anspruch 1 oder 2, wobei das mittlere Segment des Hauptträgers (11, 21) mit einer nach oben gebogenen schrägen Strebe (112) verbunden ist, die mit dem gebogenen Trägerrohr (12, 22) verbunden ist, und die Ablaufrinne (16, 161, 261) ferner zwischen der gebogenen schrägen Strebe (112) und dem Hauptträger (11, 21) konstruiert ist.

7. Intelligentes Steuerungssystem für ein Treibhaus mit Dach nach Anspruch 1 oder 2, wobei die Jalousie (14, 141, 142, 143) zwischen den beiden Hauptträgern (11, 21) in der ersten Skeletteinheit (1) mit den mittleren bis unteren oder mittleren bis oberen Segmenten des Hauptträgers (11, 21) verbunden ist.

8. Intelligentes Steuerungssystem für ein Treibhaus mit Dach nach Anspruch 1 oder 2, wobei die Schicht (13) ein Dünnschichtsolarglas oder eine Kunststofffolie ist.

9. Intelligentes Steuerungssystem für ein Treibhaus mit Dach nach Anspruch 1 oder 2, wobei jedes der beiden gebogenen Trägerrohre (12, 22) in der ersten Skeletteinheit (1) ein Ende aufweist, das den Boden senkrecht berührt, und die beiden gebogenen Trägerrohre (12, 22) mit den beiden Jalousien (14, 141, 142, 143) kombiniert sind, die Folgendes aufweist: eine befindet sich auf der Bodenseite des gebogenen Trägerrohrs (12, 22) und ist an einer Verbindungsstelle der Oberseite der Jalousie (14, 141, 142, 143) mit der Schicht (13) mit der Ablaufrinne (161) ausgestattet; die andere ist senkrecht mit dem Scheitel der gebogenen Trägerrohre verbunden.

10. Intelligentes Steuerungssystem für ein Treibhaus mit Dach nach Anspruch 1 oder 2, wobei die Stahlbleche (15) Vorhangwände aus Metallverbindungen oder doppelbeschichtete Stahlbleche (15) sind.

11. Intelligentes Steuerungssystem für ein Treibhaus mit Dach nach Anspruch 1 oder 2, wobei die Stahlbleche (15), die zwischen zwei gebogenen Trägerrohren (12, 22) der ersten Skeletteinheit (1) oder an unteren Rändern der gebogenen Trägerrohre (12, 22) der zweiten Skeletteinheit (2) liegen, ferner mit Seitenfenstern (18) oder Seitentüren (19) versehen sind.

12. Intelligentes Steuerungssystem für ein Treibhaus mit Dach nach Anspruch 1 oder 2, wobei ein verlängertes Ende der beiden gebogenen Trägerrohre (12, 22), das aus dem Hauptträger (11, 21) ragt, ferner mit den geraden Trägerrohren (24) verbunden ist.

13. Intelligentes Steuerungssystem für ein Treibhaus mit Dach nach Anspruch 1 oder 2, wobei die kleinen Querstreben (122, 123), die an den beiden gebogenen Trägerrohren (12, 22) der ersten oder zweiten Skeletteinheit (1, 2) angebracht sind, mit einem Leitaufsatz (17) verbunden sind, der zum Leiten von Wind nach innen verwendet wird.

14. Intelligentes Steuerungssystem für ein Treibhaus mit Dach nach Anspruch 13, wobei der Leitaufsatz (17) mit zwei entgegengesetzt angeordneten Belüftungsöffnungen versehen ist.

15. Intelligentes Steuerungssystem für ein Treibhaus mit Dach nach Anspruch 14, wobei die Belüftungsöffnung eine Röhre aufweist, die von ihrem Unterteil aus verlängert ist.

16. Intelligentes Steuerungssystem für ein Treibhaus mit Dach nach Anspruch 1 oder 2, wobei das Treibhaus mit Dach zusätzlich ein automatisches Umweltanpassungs-/Steuerungssystem mit einem LED-Lichtausgleichssystem, Sonnenblenden, einem Bewässerungssystem mit Mikroversickerung, einem Sprüh- & Kühlsystem, einem CO₂-Einstellsystem und einem Sensorsystem umfasst.

17. Intelligentes Steuerungssystem für ein Treibhaus mit Dach nach Anspruch 12, das ferner eine Windschutzwand oder einen Windschutz umfasst, die bzw. der zwischen den beiden geraden Trägerrohren (24) aufgebaut ist.

## Revendications

1. Système de commande intelligent de serre à auvent comprenant :
(1) une pluralité de supports principaux (11, 21) qui sont disposés de manière symétrique, chacun des supports principaux (11, 21) pénètre dans le bord supérieur d'une poutre tubulaire incurvée (12, 22), une première extrémité de la poutre tubulaire incurvée faisant saillie à partir de chaque support principal (11, 21) ;
(2) une pluralité de petites entretoises (122, 123, 222) installées entre les deux poutres tubulaires incurvées (12, 22) pour renforcer la structure du système ;
(3) au moins une persienne (14, 141, 142, 143) installée entre les deux poutres tubulaires incurvées (12, 22) et les deux supports principaux (11, 21) ;
(4) un film (13) recouvrant entre les deux poutres tubulaires incurvées (12, 22) ;
(5) une tôle d'acier (15, 151) enveloppant de façon amovible des espaces de deux supports principaux (11, 21) ou des bords inférieurs de deux poutres tubulaires incurvées pour devenir une première unité de squelette (1) ;
(6) une gouttière (16, 161, 261) construite au niveau du bord de la première unité de squelette (1) ;
au moins une première unité de squelette (1) s'assemblant pour construire le système de commande intelligent de serre à auvent.

2. Système de commande intelligent de serre à auvent selon la revendication 1, comprenant :
une seconde unité de squelette (2) pour liaison de la première unité de squelette (1) comprenant :
(1) deux supports principaux (11, 21) qui sont disposés de manière symétrique, dont chacun pénètre dans le bord supérieur de la poutre tubulaire incurvée (12, 22) qui fait saillie à partir de chaque support principal (11, 21) au niveau de son extrémité et l'autre extrémité est reliée à la première unité de squelette (1) ;
(2) une pluralité de petites entretoises (122, 123) installées entre les deux poutres tubulaires incurvées (12) pour une structure renforcée ;
(3) un film (13) recouvert entre les deux poutres tubulaires incurvées (12, 22) ;
(4) une tôle d'acier (15) enveloppant de façon amovible des espaces de deux supports principaux (11, 21) ou des bords inférieurs de deux poutres tubulaires incurvées pour devenir un second squelette (2) ;
la seconde unité de squelette (2) s'assemblant avec la première unité de squelette (1) pour construire le système de commande intelligent de serre à auvent.

3. Système de commande intelligent de serre à auvent selon la revendication 2, dans lequel le système de commande intelligent de serre à auvent est constitué d'une pluralité des première et seconde unités de squelette (1, 2) latéralement ou longitudinalement.

4. Système de commande intelligent de serre à auvent selon la revendication 1 ou 2, dans lequel le support principal (11, 21) est une structure en forme de L qui est munie d'un orifice sur le dessus pour la liaison d'une partie d'extension pliée (111).

5. Système de commande intelligent de serre à auvent selon la revendication 4, dans lequel la partie d'extension pliée (111) est couplée à au moins une tôle d'acier (15) et une persienne (14, 141, 142, 143).

6. Système de commande intelligent de serre à auvent selon la revendication 1 ou 2, dans lequel le segment central du support principal (11, 21) est couplé à une contrefiche inclinée incurvée vers le haut (112) qui est reliée à la poutre tubulaire incurvée (12, 22), et la gouttière (16, 161, 261) est en outre construite entre la contrefiche inclinée incurvée (112) et le support principal (11, 21).

7. Système de commande intelligent de serre à auvent selon la revendication 1 ou 2, dans lequel la persienne (14, 141, 142, 143) entre les deux supports principaux (11, 21) dans la première unité de squelette (1) est reliée aux segments du milieu vers le bas ou du milieu vers le haut du support principal (11, 21).

8. Système de commande intelligent de serre à auvent selon la revendication 1 ou 2, dans lequel le film (13) est un verre solaire à film mince ou un film de matière plastique.

9. Système de commande intelligent de serre à auvent selon la revendication 1 ou 2, dans lequel chacune des deux poutres tubulaires incurvées (12, 22) dans la première unité de squelette (1) a une extrémité en contact vertical avec le sol et les deux poutres tubulaires incurvées (12, 22) sont combinées aux deux persiennes (14, 141, 142, 143), ce qui comprend : l'une est située côté sol de la poutre tubulaire incurvée (12, 22) et équipée de la gouttière (161) au niveau d'une liaison de la partie supérieure de la persienne (14, 141, 142, 143) et du film (13) ; l'autre est couplée verticalement avec le sommet de la poutre tubulaire incurvée.

10. Système de commande intelligent de serre à auvent selon la revendication 1 ou 2, dans lequel les tôles d'acier (15) sont des parois de rideau en composé métallique ou des tôles d'acier revêtues à double couche (15).

11. Système de commande intelligent de serre à auvent selon la revendication 1 ou 2, dans lequel les tôles d'acier (15) entre deux poutres tubulaires incurvées (12, 22) de la première unité de squelette (1), ou au niveau de bords inférieurs des poutres tubulaires incurvées (12, 22) de la seconde unité de squelette (2), comportent en outre des fenêtres latérales (18) ou des portes latérales (19).

12. Système de commande intelligent de serre à auvent selon la revendication 1 ou 2, dans lequel une extrémité étendue des deux poutres tubulaires incurvées (12, 22) faisant saillie à partir du support principal (11, 21) est en outre couplée aux poutres tubulaires droites (24).

13. Système de commande intelligent de serre à auvent selon la revendication 1 ou 2, dans lequel les petites entretoises (122, 123) installées sur les deux poutres tubulaires incurvées (12, 22) de la première ou de la seconde unité de squelette (1, 2) sont couplées à un chapeau en entonnoir (17) utilisé pour guider le vent vers l'intérieur.

14. Système de commande intelligent de serre à auvent selon la revendication 13, dans lequel le chapeau en entonnoir (17) comporte deux évents disposés en opposition.

15. Système de commande intelligent de serre à auvent selon la revendication 14, dans lequel l'évent a un tube s'étendant à partir de sa base.

16. Système de commande intelligent de serre à auvent selon la revendication 1 ou 2, dans lequel la serre à auvent comprend de plus un système d'ajustement/commande environnemental automatique ayant un système de compensation de lumière à DEL, des pare-soleils, un système d'irrigation par micro-infiltration, un système de pulvérisateur et de refroidissement, un système d'ajustement de CO₂ et un système de capteur.

17. Système de commande intelligent de serre à auvent selon la revendication 12, comprenant en outre une paroi anti-vent ou un pare-vent qui est construit entre les deux poutres tubulaires droites (24).
